# DEMANDE DE BREVET EUROPEEN

(11) **EP 1 445 446 A2**
(43) Date de publication de la demande: **11.08.2004**
(21) Numéro de dépôt: 04290114.0
(22) Date de dépôt: 15.01.2004
(51) Int. Cl.: F02B 37/00, F02C 6/12

(54) **Dispositif d'alimentation en air du compresseur d'un moteur thermique suralimenté**

(30) Priorité: 15.01.2003 FR 0300397
(71) Demandeur: Renault s.a.s., 92100 Boulogne Billancourt (FR)
(72) Inventeur: Lefebvre, Alain, 91620 Nozay (FR)
(74) Mandataire: Cemeli, Eric

(57) **Abrégé**

Dispositif d'alimentation en air du compresseur (1) d'un moteur thermique suralimenté, comprenant un conduit tubulaire d'admission d'air (2) raccordé à l'entrée d'air (3) du carter (4) du compresseur (1), caractérisé en ce que ledit conduit tubulaire (2) comporte une partie tubulaire convergente (6) relativement au sens de l'écoulement de l'air dont l'extrémité (6a) de plus faible diamètre est adjacente à l'entrée d'air (3) du carter (4) du compresseur (1).

## Description

La présente invention concerne un dispositif d'alimentation en air du compresseur, notamment d'un turbocompresseur d'un moteur thermique suralimenté du type diesel ou à allumage commandé.

Dans les réalisations connues, le dispositif d'alimentation en air du compresseur d'un moteur thermique suralimenté comprend un conduit tubulaire d'admission d'air raccordé à l'entrée d'air du carter du compresseur. Le rotor, ou roue de compresseur, entraîné en rotation à l'intérieur du carter du compresseur envoie l'air comprimé dans les chambres de combustion du moteur ce qui permet d'améliorer les performances de ce moteur par rapport à un moteur alimenté en air à la pression atmosphérique.

Les objectifs de performance et de consommation des futurs moteurs suralimentés rendent de plus en plus difficile la réalisation de turbocompresseurs bénéficiant d'une plage de fonctionnement assez large pour obtenir le meilleur compromis entre le couple à bas régime et la puissance maximale.

En effet, s'il n'existe aucune difficulté pour assurer les débits élevés en air comprimé à régime moyen et élevé de rotation du moteur, le compresseur se trouve souvent en dehors de son champ de fonctionnement normal, aux faibles débits c'est-à-dire à bas régime de rotation du moteur. Dans ce cas, le compresseur se trouve à la limite ou dans la zone dite de pompage.

Les phénomènes de pompage du compresseur sont dus au décollement de la couche limite de l'écoulement de l'air sur les aubes de la turbine du compresseur apparaissant quand l'énergie cinétique du fluide c'est-à-dire de l'air n'est plus suffisante pour s'opposer au gradient de pression adverse.

Le but de la présente invention est de remédier aux problèmes liés aux phénomènes de pompage ci-dessus en créant un moyen pour augmenter l'énergie cinétique du fluide par une mise en vitesse de ce fluide afin de repousser ainsi l'apparition du phénomène de pompage et par conséquent d'améliorer les performances du moteur à bas régimes.

Suivant l'invention, le dispositif d'alimentation en air du compresseur d'un moteur thermique suralimenté, comprenant un conduit tubulaire d'admission d'air raccordé à l'entrée d'air du carter du compresseur est caractérisé en ce que ledit conduit tubulaire comporte une partie tubulaire convergente relativement au sens de l'écoulement de l'air dont l'extrémité de plus faible diamètre est adjacente à l'entrée d'air du carter du compresseur.

Par rapport à des conduits d'alimentation en air du compresseur, dépourvus de partie convergente, par exemple à section de passage constant, les gains peuvent atteindre quelques centaines de millibars supplémentaires du rapport de compression du compresseur, ce qui se traduit par une augmentation significative des performances du moteur à bas régimes.

Bien entendu, le gain de performances ainsi obtenu est dépendant du niveau de suralimentation du moteur ainsi que des caractéristiques du moteur proprement dit.

Selon une version préférée de l'invention, l'extrémité de plus faible diamètre de la partie convergente est directement raccordée à l'entrée d'air du carter du compresseur.

De préférence également, la partie tubulaire convergente est tronconique.

Dans un mode particulier de réalisation de l'invention, où l'entrée d'air du carter du compresseur présente une surface convergente vers l'intérieur du carter du compresseur, ladite partie tubulaire convergente dudit conduit d'alimentation en air étant reliée à ladite entrée d'air de façon à être située dans le prolongement de la dite surface convergente.

Ainsi, cette surface convergente prolonge la partie tubulaire convergente du conduit d'alimentation en air, ce qui se traduit par une augmentation de la vitesse de l'air et une amélioration des performances du moteur à bas régimes.

D'autres particularités et avantages de l'invention apparaîtront encore dans la description ci-après.

Aux dessins annexés, donnés à titre d'exemples non limitatifs :
- la figure 1 est une vue schématique en coupe d'un dispositif d'alimentation en air d'un compresseur, selon l'invention ;
- la figure 2 est une vue en coupe d'un turbocompresseur équipé à son entrée d'air d'un conduit présentant une partie convergente ;
- les figures 3 à 9 montrent en coupe schématique différents dispositifs d'alimentation d'un compresseur qui ont été soumis à des tests comparatifs afin de mettre en évidence les avantages procurés par le dispositif selon l'invention ;
- la figure 10 est un diagramme montrant l'évolution du couple du moteur en fonction de son régime pour les différents dispositifs d'alimentation illustrés par les figures 3 à 9 ;
- la figure 11 est une vue analogue à la figure 10 montrant l'évolution de la

PME (pression moyenne effective) en fonction du régime du moteur.

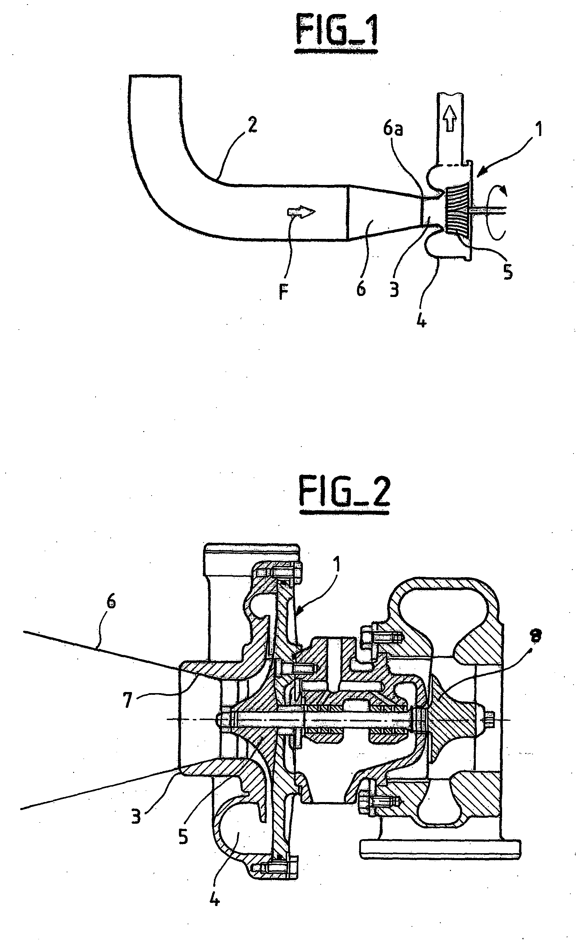

Comme montré par la figure 1, le dispositif d'alimentation en air du compresseur 1 d'un moteur thermique suralimenté, comprend un conduit tubulaire d'admission d'air 2 raccordé à l'entrée d'air 3 du carter 4 du compresseur 1 dans lequel est montée en rotation un rotor 5 également appelé « roue du compresseur ».

Conformément à l'invention, le conduit tubulaire 2 comporte une partie tubulaire convergente 6, relativement au sens F de l'écoulement de l'air, dont l'extrémité 6a de plus faible diamètre est adjacente à l'entrée d'air 3 du carter 4 du compresseur 1.

La figure 2 représente un turbocompresseur dans lequel la roue du compresseur 5 montée en rotation dans le carter 4 est entraînée en rotation par la turbine 8 actionnée par les gaz d'échappement.

Dans cet exemple, l'extrémité 6a de plus faible diamètre de la partie convergente 6 est directement raccordée à l'entrée d'air 3 du carter du compresseur 1.

Dans les exemples représentés sur les figures 1 et 2, la partie tubulaire convergente 6 est tronconique.

Dans la réalisation illustrée par la figure 2, l'entrée d'air 3 du carter 4 du compresseur 1 présente une surface 7 tronconique convergente vers l'intérieur du carter 4 du compresseur 1 et la partie tubulaire convergente 6 du conduit d'alimentation en air est reliée à l'entrée d'air 3 de façon à être située dans le prolongement de la surface convergente 7. Cette surface 7 convergente prolonge ainsi la partie convergente 6.

Dans un autre mode de réalisation, la partie tubulaire convergente 6 peut être constituée par une partie intégrée au carter 4 du compresseur, prolongeant la surface convergente 7 de l'entrée de ce carter 4.

A titre d'exemple, non limitatif, dans le cas d'un moteur thermique suralimenté de puissance moyenne, le rapport du diamètre le plus grand D de la partie convergente 6 sur son diamètre le plus petit peut être compris entre 6/5 et 2 et le rapport de la longueur L de la partie convergente 6 sur son diamètre le plus grand peut être compris entre 5/3 et 2.

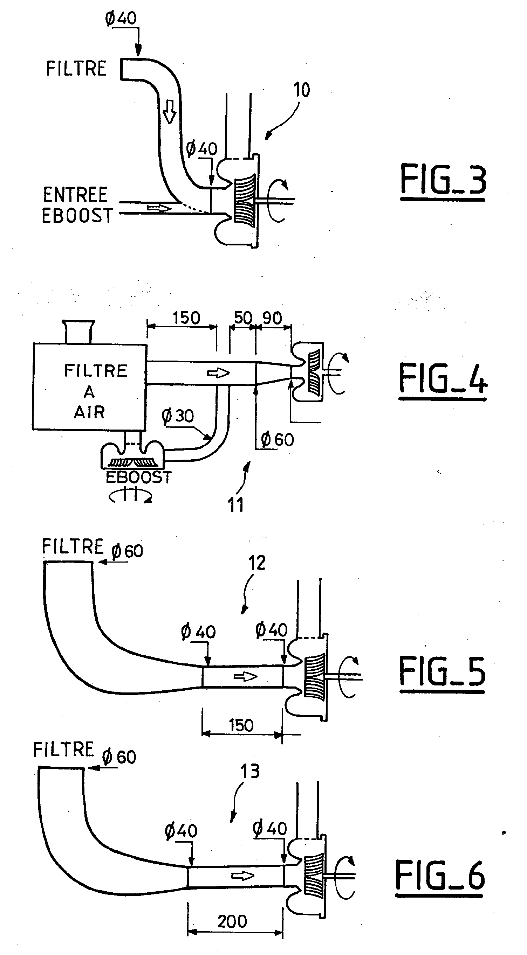

Les figures 3 à 9 illustrent différents dispositifs d'alimentation en air de compresseur qui ont été utilisés sur un moteur du type K4D Turbo d'une automobile Renault Scénic. Sur les figures 3 à 9 les longueurs et les diamètres sont exprimés en millimètres.

La figure 3 montre un dispositif 10 dans lequel le conduit d'alimentation en air est de section constante et comporte une entrée EBOOST (compresseur électrique additionnel, placé en amont du turbocompresseur) située près de l'entrée du compresseur.

La figure 4 montre un dispositif 11 comportant un conduit de section constante présentant une partie convergente adjacente au compresseur. Ce dispositif comporte également une tubulure reliant la partie de section constante du conduit à un compresseur EBOOST.

La figure 5 montre un dispositif 12 comportant un conduit d'alimentation coudé présentant une extrémité rétrécie qui est raccordée au compresseur par une partie tubulaire de section constante.

La figure 6 montre un conduit d'alimentation coudé présentant comme dans le cas de la figure 5 un rétrécissement qui est raccordé au compresseur par une tubulure de section constante dont la longueur est supérieure à celle représentée sur la figure 5.

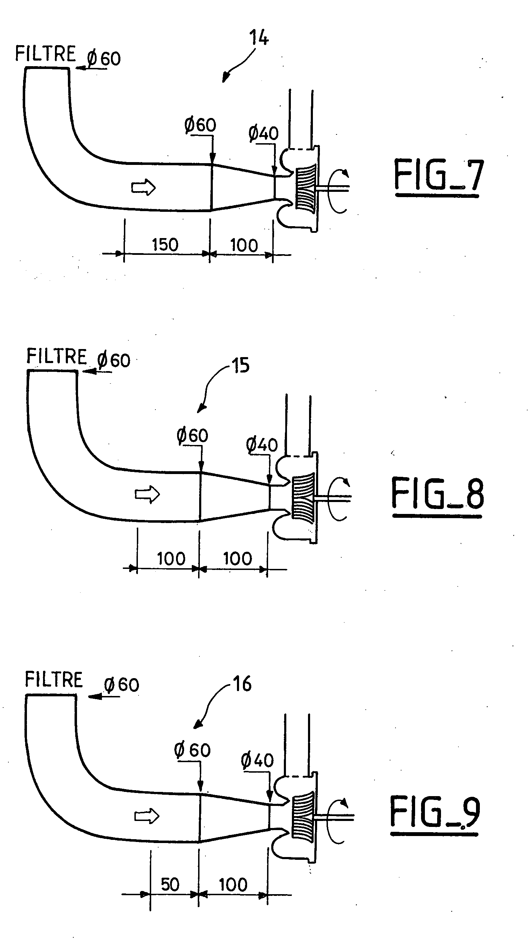

La figure 7 montre un dispositif 14 comportant un conduit d'alimentation coudé de section constante raccordé au compresseur par une partie convergente.

La figure 8 est une vue analogue à la figure 7 dans laquelle la partie droite du conduit de section constante a une longueur moins importante que dans le cas de la figure 7.

La figure 9 est une vue analogue à la figure 8, dans laquelle la partie droite du conduit d'alimentation de section constante a une longueur moins importante que dans le cas de la figure 8.

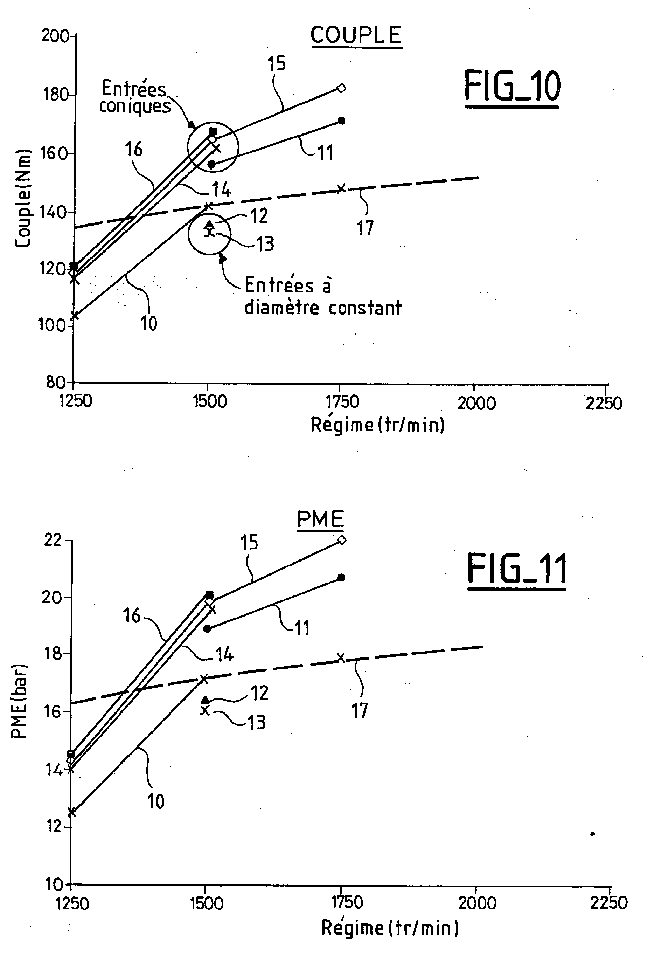

Le diagramme de la figure 10 montre que dans le cas des dispositifs d'alimentation 11, 14, 15 et 16 la présence d'une partie convergente à l'entrée d'air du compresseur permet d'augmenter le couple du moteur à bas régimes, à savoir plus 16 Nm à 1250 tr / min et plus 25 Nm à 1500 tr / min sur le moteur K4D Turbo de la Renault Scénic.

De même, la présence de la partie convergente conformément à l'invention à l'entrée du compresseur permet d'augmenter significativement la PME (pression moyenne effective) à savoir 14,5 bar à 1250 tr/min, 20 bar à 1500 tr / min et 22 bar à 1750 tr / min.

Les tests comparatifs ci-dessus montrent d'une manière générale que :
- l'entrée conique du compresseur génère une mise en vitesse (gradient de pression négatif) dès l'entrée de la roue du compresseur ce qui a pour effet de retarder les phénomènes de décollement de la couche limite,
- l'entrée conique est certainement mieux adaptée à l'entrée du carter du compresseur qui est elle-même munie d'une surface conique. Les configurations du conduit d'alimentation à diamètre constant peuvent provoquer un décollement de la couche limite du au changement de pente à l'entrée du carter du compresseur,
- le coude du conduit d'alimentation pourrait provoquer une pré rotation du fluide qui retarderait également le décollement de la couche limite, pourvu que l'orientation du coude soit correcte. Cette hypothèse pourrait être vérifiée simplement en inversant le sens du coude pour provoquer une rotation inverse au sens de rotation de la turbine du compresseur. Les gains dus au coude sont malgré tout moins importants que ceux obtenus par la partie convergente reliée à l'entrée du compresseur.

## Revendications

1. Dispositif d'alimentation en air du compresseur (1) d'un moteur thermique suralimenté, comprenant un conduit tubulaire d'admission d'air (2) raccordé à l'entrée d'air (3) du carter (4) du compresseur (1), **caractérisé en ce que** ledit conduit tubulaire (2) comporte une partie tubulaire convergente (6) relativement au sens de l'écoulement de l'air dont l'extrémité (6a) de plus faible diamètre est adjacente à l'entrée d'air (3) du carter (4) du compresseur (1).

2. Dispositif d'alimentation selon la revendication 1, **caractérisé en ce que** ladite extrémité (6a) de plus faible diamètre est directement raccordée à l'entrée d'air (3) du carter (4) du compresseur.

3. Dispositif d'alimentation selon l'une des revendications 1 ou 2, **caractérisé en ce que** ladite partie tubulaire convergente (6) est tronconique.

4. Dispositif d'alimentation selon l'une des revendications 1 à 3, **caractérisé en ce que** l'entrée d'air (3) du carter (4) du compresseur (1) présente une surface convergente (7) vers l'intérieur du carter (4) du compresseur, ladite partie tubulaire convergente (6) dudit conduit d'alimentation en air (2) étant reliée à ladite entrée d'air (3) de façon à être située dans le prolongement de ladite surface convergente (7).

5. Dispositif d'alimentation selon l'une des revendications 1 à 4, **caractérisé en ce que** le rapport du diamètre le plus grand (D) de ladite partie convergente (6) sur son diamètre (d) le plus petit est compris entre 6/5 et 2 et le rapport de la longueur (L) de ladite partie convergente (6) sur son diamètre le plus grand est compris entre 5/3 et 2.
